# EUROPÄISCHE PATENTSCHRIFT

(11) **EP 3 687 844 B1**
(45) Veröffentlichungstag und Bekanntmachung des Hinweises auf die Patenterteilung: **01.11.2023**
(21) Anmeldenummer: 18778915.1
(22) Anmeldetag: 27.09.2018
(51) Int. Cl.: B60J 1/20, B60J 7/00, F16C 1/14

(54) **ROLLOSYSTEM FÜR EIN FAHRZEUGDACH**
ROLLER BLIND FOR VEHICLE ROOF
SYSTEME DE STORE POUR TOIT DE VEHICULE

(30) Priorität: 27.09.2017 DE 102017122496
(43) Veröffentlichungstag der Anmeldung: 05.08.2020
(73) Patentinhaber: Webasto SE, 82131 Stockdorf (DE)
(72) Erfinder: ALBAN, Vasile-Marius, 82131 Stockdorf (DE); WINKLER, Werner, 82131 Stockdorf (DE); ARDELEAN, Constantin, 82131 Stockdorf (DE); POPOVICI, Andrei, 82131 Stockdorf (DE); HAAS, Josef, 82131 Stockdorf (DE)
(74) Vertreter: Schwan Schorer & Partner mbB
(86) Internationale Anmeldenummer: PCT/EP2018/076282
(87) Internationale Veröffentlichungsnummer: WO 2019/063702

(56) Entgegenhaltungen:
- DE-A1-102004 020 335
- DE-A1-102012 006 848
- DE-C1- 19 750 715
- US-A1- 2014 203 598
- US-A1- 2014 246 884

## Beschreibung

Die vorliegende Erfindung betrifft ein Rollosystem für ein Fahrzeugdach gemäß dem Oberbegriff von Anspruch 1.

Es sind Rollosysteme für Fahrzeugdächer bekannt, welche zwei Rolloanordnungen aufweisen. Wenn ein solches Rollosystem mit nur einem Antrieb angetrieben werden soll, die beiden Rolloanordnungen aber Rollobahnen unterschiedlicher Länge aufweisen, so kann vorgesehen sein, dass die längere Rollobahn fest mit einem Antriebskabel verbunden ist, während die kürzere Rollobahn von dem gemeinsamen Antriebskabel entkoppelbar ist. Unter einer festen Verbindung ist dabei verstehen, dass die Verbindung im normalen Betrieb des Rollosystems nicht gelöst wird, sondern nur zur Montage oder Demontage oder im Falle eines ungewöhnlichen Betriebszustandes wie dies im Folgenden näher erläutert werden wird.

Aus der DE 10 2004 020 335 A1 ist ein solches Rollosystem bekannt. Mithilfe zweier Antriebskabel werden eine kürzere Rollobahn und eine längere Rollobahn von jeweils einer zugehörigen Wickelwelle abgerollt. In den Wickelwellen ist eine Federanordnung angeordnet, mittels welcher die beiden Rollobahnen auf die Wickelwellen aufgewickelt werden. Ein Kopplungsmechanismus ist vorgesehen, um einen Zugspriegel der kürzeren Rollobahn mit den Antriebskabeln zu koppeln bzw. von diesen wieder zu entkoppeln. Die Rollobahnen werden gegen die Zugbelastung, mit der sie von ihrer Wickelwelle beaufschlagt werden, in eine Schließstellung abgerollt.

Die DE 197 50 715 C1 offenbart eine Rollosystem mit zwei Rollobahnen. Die US2014/0203598 A1 offenbar ein System zum Verbinden von zwei Objekten.

Nachteilig an bekannten Rollosystemen ist die komplexe Kopplungsmechanik, wie sie in der DE 10 2004 020 335 A1 ausführlich beschrieben wird.

Es ist Aufgabe der vorliegenden Erfindung, ein Rollosystem für ein Fahrzeugdach mit zwei Rolloanordnungen und unterschiedlich langen Rollobahnen zu schaffen, welches einfach und kostengünstig herzustellen ist.

Diese Aufgabe wird erfindungsgemäß gelöst durch ein Rollosystem gemäß dem Kennzeichen des Anspruchs 1.

Erfindungsgemäß weist der Verriegelungsmechanismus eine elastisch verformbare Schnappverbindung auf, mittels derer der zweite Abschnitt des Antriebskabels mit dem Zugspriegel der zweiten Rolloanordnung lösbar koppelbar ist.

Dabei ist vorteilhaft, dass durch das Vorsehen einer elastisch verformbaren Schnappverbindung aufwändig zu fertigende Bauteile wie Sperrklinken und Kulissenbahnen überflüssig werden.

Die elastisch verformbare Schnappverbindung weist eine Verdickung auf, die zur lösbaren Kopplung durch eine Aufnahme der Schnappverbindung aufgenommen werden kann, wobei die Aufnahme elastisch verformt wird, und wobei die Aufnahme vorzugsweise ein Kunststoffspritzteil ist.

Die Verdickung ist dabei am zweiten Abschnitt des Antriebskabels angeordnet oder mit dem Zugspriegel der zweiten Rolloanordnung verbunden, und die Aufnahme ist als eine elastisch aufweitbare Öffnung mit einer Hinterschneidung ausgebildet, die mit dem Zugspriegel der zweiten Rolloanordnung verbunden oder am zweiten Abschnitt des Antriebskabels angeordnet ist.

Die elastisch verformbare Schnappverbindung ist so ausgebildet, dass sie durch eine Kraft, mit der sie durch den Antrieb beaufschlagt werden kann, unter einer reversiblen elastischen Verformung entkoppelt werden kann.

Vorteilhafte Ausgestaltungen der vorliegenden Erfindung ergeben sich aus den Unteransprüchen.

Vorzugsweise wird in einem Bereich der zweiten Rolloanordnung die geschlossene Schnappverbindung innerhalb eines Führungskanals geführt, der mindestens abschnittsweise so dimensioniert ist, dass sich die geschlossene Schnappverbindung in diesem Abschnitt nicht öffnen kann. Dies sichert die Schnappverbindung gegen ein ungewolltes Lösen.

Bei einer besonders bevorzugten Ausgestaltung der Erfindung verbleibt das Antriebskabel mit seinem zweiten Abschnitt mit dem Zugspriegel der zweiten Rolloanordnung im teilweise und vollständig abgerollten Zustand der zweiten Rollobahn gekoppelt. Dies bietet den Vorteil, dass ein Stick-Slip-Effekt vermieden wird. Unter einem Stick-Slip-Effekt ist dabei ein Haftgleiteffekt oder eine selbst-erregte Reibschwingung zu verstehen, welche das Ruckgleiten von gegeneinander bewegten Festkörpern charakterisiert. Dadurch, dass das Antriebskabel mit dem Zugspriegel immer verbunden bleibt, während die zweite Rollobahn bewegt wird (und auch im Ruhezustand, wenn die zweite Rollobahn vollständig abgewickelt ist), unterstützt das Antriebskabel sowohl das Abwickeln als auch das Aufwickeln der zweiten Rollobahn, wodurch Stick-Slip-Effekte verhindert werden können.

Zwei drucksteife Antriebskabel können vorgesehen sein, die von dem Antrieb in entgegengesetzter Richtung gemeinsam angetrieben werden und jeweils an gegenüberliegenden seitlichen Enden des jeweiligen Zugspriegels über die ersten bzw. zweiten Abschnitte angreifen. Die Verwendung von zwei Antriebskabeln bietet den Vorteil, dass ein Verkanten eines Zugspriegels vermieden wird, da die Zugspriegel an beiden Seitenbereichen des Fahrzeugdachs angetrieben werden.

Vorzugsweise wird der zweite Abschnitt in entgegengesetzter Richtung zum ersten Abschnitt bewegt und die beiden Rolloanordnungen sind in entgegengesetzter Richtung zueinander ausziehbar.

Eine besonders bevorzugte Ausgestaltung der vorliegenden Erfindung ergibt sich, wenn die erste, längere Rollobahn durch das Antriebskabel in eine Schließstellung mit abgewickelter erster Rollobahn gezogen und in eine Offenstellung mit aufgewickelter erster Rollobahn geschoben wird. Dann wird vorzugsweise die zweite, kürzere, Rollobahn durch das Antriebskabel in eine Schließstellung mit abgewickelter zweiter Rollobahn geschoben und durch das Antriebskabel in eine Offenstellung mit aufgewickelter zweiter Rollobahn gezogen. Dies bietet den besonderen Vorteil, dass die elastisch verformbare Schnappverbindung bei einer Bewegung des Antriebskabels in Richtung des Zugspriegels der kürzeren Rollobahn zugedrückt werden kann, und das Antriebskabel die elastisch verformbare Schnappverbindung so in Schließrichtung belastet. Umgekehrt wird zur Öffnung der zweiten Rolloanordnung der Zugspriegel deren kürzerer Rollobahn so bewegt, dass die elastisch verformbare Schnappverbindung in Öffnungsrichtung belastet wird und beim Erreichen der Offenstellung mit komplett aufgewickelter zweiter Rollobahn von dieser bzw. deren Zugspriegel gelöst wird, um weiterhin die erste, längere Rollobahn zu bewegen. Damit wird vermieden, dass die höheren Kräfte, die beim Abwickeln der kürzeren Rollobahn auftreten, die Schnappverbindung lösen.

Bei einer weiteren bevorzugten Ausgestaltung der Erfindung sind beide Wickelwellen mittels Federelemente in eine Aufwickelrichtung vorgespannt. Dadurch wird ein Durchhängen der Rollobahnen vermieden und das Aufwickeln beider Rollobahnen erleichtert.

Vorzugsweise wird in einem Bereich der zweiten Rolloanordnung die geschlossene Schnappverbindung innerhalb eines Führungskanals geführt, wobei vor und / oder in einem ersten Abschnitt des Führungskanals, der der ersten Rolloanordnung zugewandt ist, ein Hohlraum vorgesehen ist, der eine lichte Weite aufweist, die so dimensioniert ist, dass sich hier die Schnappverbindung öffnen kann, und der Führungskanal ist in einem zweiten Abschnitt, der auf den ersten Abschnitt folgt, so dimensioniert, dass sich die geschlossenen Schnappverbindung hier nicht öffnen kann. Dabei entspricht vorzugsweise eine lichte Weite des zweiten Abschnitts im Wesentlichen dem Durchmesser der geschlossenen Schnappverbindung, sodass ein Öffnen der Schnappverbindung durch ein Aufbiegen der Klemmfinger radial nach außen verhindert wird. Die Schnappverbindung ist so in dem Bereich neben der zweiten Rollobahn gegen ein ungewolltes Öffnen z.B. durch eine Rüttelbewegung des Fahrzeugs oder eine Klemmwirkung gesichert. Dies erleichtert ferner die Montage, da durch ein einfaches Vorschieben der Kabel die Schnappverbindung geschlossen wird.

Bei einer weiteren bevorzugten Ausgestaltung der Erfindung sind zwei drucksteife Antriebskabel vorgesehen, die von dem Antrieb in entgegengesetzter Richtung gemeinsam angetrieben werden und jeweils an gegenüberliegenden seitlichen Enden des jeweiligen Zugspriegels über die ersten bzw. zweiten Abschnitte angreifen.

Die beiden Antriebskabel werden vorzugsweise zweimal um je 90° umgelenkt, wobei die beiden Antriebskabel zusammen eine in der Aufsicht U-förmige Konfiguration bilden und wobei ein Antrieb im Verbindungsbereich zwischen den beiden "Schenkeln" des U die Antriebskabel antreibt.

Der Antrieb ist dabei vorzugsweise auf der Seite des Rollosystems angeordnet, zu der der Zugspriegel der ersten Rollobahn beim Abwickeln der ersten Rollobahn bewegt wird.

Bei einer besonders bevorzugten Ausgestaltung der Erfindung ist das Antriebskabel in einem Bereich zwischen der ersten Rolloanordnung und der zweiten Rolloanordnung innerhalb eines Übergangsrohrs geführt. Dies erleichtert die Montage, da die Kabel nur durch das jeweilige Übergangsrohr gesteckt werden müssen.

Das Übergangsrohr kann so ausgerichtet sein, dass es den zweiten Abschnitt des Antriebskabels so zentriert, dass die Schnappverbindung bei einem Vorschieben der Antriebskabel in Richtung der zweiten Rolloanordnung geschlossen wird, was die Montage weiter erleichtert.

Im Folgenden wird die Erfindung anhand der beigefügten Figuren beispielhaft näher erläutert. Es zeigen:
- Fig. 1:: ein erfindungsgemäßes Rollosystem mit einer ersten und einer zweiten Rolloanordnung in einer Offenstellung;
- Fig. 2:: das Rollosystem der Fig. 1 in einer geschlossenen Stellung;
- Fig. 3:: eine Anbindung zur Verbindung eines Antriebskabels mit einem Zugspriegel;
- Fig. 4:: die Anbindung der Fig. 3 mit einem angekoppelten Antriebskabel;
- Fig. 5:: einen Querschnitt durch die Anbindung bzw. die Schnappverbindung der Fig. 3 in einer Querschnittsansicht; und
- Fig. 6, 7: zwei weitere erfindungsgemäße Rollosysteme, wobei hier im Unterschied zu den Ausführungsformen der Figuren 1 und 2 die längere Rollobahn im Bild rechts angeordnet ist.

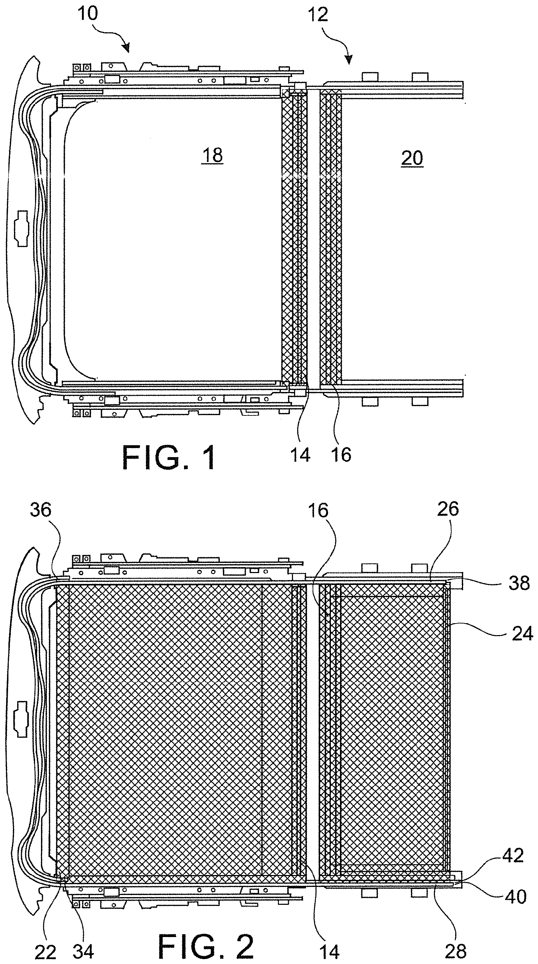

Die Figuren 1 und 2 zeigen ein Rollosystem für ein Fahrzeugdach mit einer ersten und einer zweiten Rolloanordnung 10 und 12, die in Dachlängsrichtung versetzt zueinander angeordnet sind und jeweils eine zugeordnete Wickelwelle 14, 16 aufweisen. Jeder Wickelwelle 14, 16 ist eine Rollobahn 18, 20 zugeordnet, wobei die Rollobahn 18 der ersten Rolloanordnung 10 in Auszugsrichtung länger ausgebildet ist, als die Rollobahn 20 der zweiten Rolloanordnung 12. An den beiden freien Enden der Rollobahnen 18 und 20 ist jeweils ein Zugspriegel 22, 24 angeordnet. Zwei drucksteif ausgebildete und/oder drucksteif geführte Antriebskabel 26, 28 sind vorgesehen, die an ersten Enden 34, 36 mit dem Zugspriegel 22 der ersten Rolloanordnung 10 fest gekoppelt sind. Mit den beiden anderen Enden 38, 40 der Antriebskabel 26, 28 sind die Antriebskabel 26, 28 mit dem Zugspriegel 24 der zweiten Rolloanordnung 12 lösbar koppelbar verbunden. In der Offenstellung der Fig. 1 ist dabei das jeweilige Ende 38, 40 der Antriebskabel 26, 28 vom Zugspriegel 24 der zweiten Rolloanordnung 12 gelöst.

Durch das Lösen der beiden Enden 38, 40 der Antriebskabel 26, 28 von dem Zugspriegel 24 der zweiten Rolloanordnung 12 ist gewährleistet, dass die beiden Antriebskabel 26, 28 die erste Rollobahn 18 über deren zugeordneten Zugspriegel 22 über einen längeren Verfahrweg bewegen können. Dies ist notwendig, da die erste Rollobahn 18 in Auszugsrichtung länger ausgebildet ist als die zweite Rollobahn 20 der zweiten Rolloanordnung 12, aber nur ein Antrieb vorgesehen ist.

Der nicht näher dargestellt Antrieb kann ein Elektromotor sein, der über ein Ritzel die Antriebskabel 26 und 28 bewegt, die hierzu als Spiralkabel ausgebildet sein können.

Fig. 2 zeigt das Rollosystem der Fig. 1 in einem Zustand, bei welchem die beiden Rollobahnen 18 und 20 von ihren zugehörigen Wickelwellen 14 und 16 abgewickelt sind, um das Rollosystem zu schließen. Unter einem geschlossenen Rollosystem ist dabei zu verstehen, dass die beiden Rollobahnen 18 und 20 von ihren zugehörigen Wickelwellen 14 und 16 abgewickelt sind, um einen Fahrzeuginnenraum unter einer verglasten Dachöffnung, beispielsweise eines Panoramadachs, zu beschatten.

Zum Abrollen der zweiten Rollobahn 20 werden die Antriebskabel 26 und 28, die in der Offenstellung der Fig. 1 nicht mit dem Zugspriegel 24 der zweiten Rolloanordnung 12 gekoppelt sind, nach einem weiteren Verfahrweg der Antriebskabel 26 und 28, der im Wesentlichen dem Längenunterschied der beiden Rollobahnen 18 und 20 entspricht, mit dem Zugspriegel 24 der zweiten Rolloanordnung 12 gekoppelt. Diese Kopplung bleibt während der gesamten Abwickelbewegung der zweiten Rollobahn 20 in die Stellung entsprechend der Fig. 2 geschlossen und auch bei einem anschließenden Aufwickeln der zweiten Rollobahn 20, mittels derer das Rollosystem wieder in die Offenstellung der Fig. 1 gebracht wird.

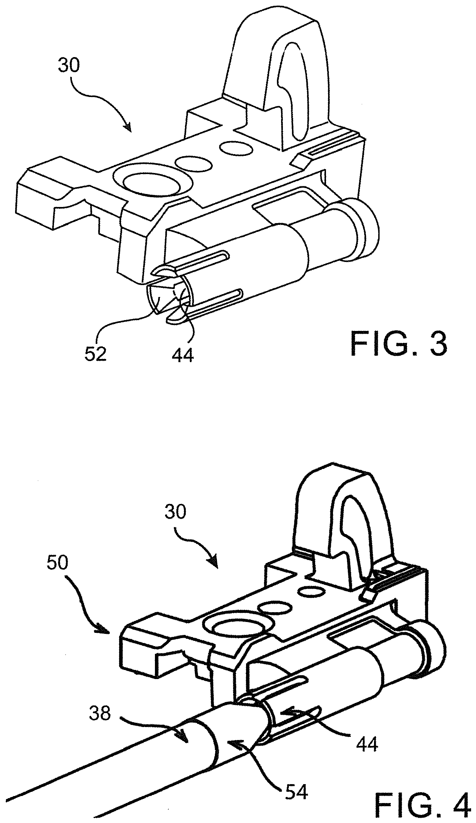

Die Kopplung und die Entkopplung der beiden Enden 38 und 40 der beiden Antriebskabel 26 und 28 mit dem Zugspriegel 24 der zweiten Rolloanordnung 12 erfolgt dabei selbsttätig durch einen Verriegelungsmechanismus, der eine elastisch verformbare Schnappverbindung 50 aufweist, der anhand der weiteren Figuren 3 bis 5 näher erläutert wird.

Die elastisch verformbare Schnappverbindung 50 ist so ausgestaltet, dass die beiden Enden 38 und 40 des Antriebskabels 26 und 28 mit dem Zugspriegel 24 der zweiten Rolloanordnung 12 lösbar koppelbar ist.

Fig. 3 zeigt eine Anbindung 30 zum Verbinden der beiden Enden 38 und 40 der Antriebskabel 26 und 28 mit dem zugeordneten Zugspriegel 24 der zweiten Rolloanordnung 12. Die Anbindung 30 weist eine Aufnahme 44 auf, welche wiederum durch vier Klemmfinger 52 ausgebildet ist. Die gesamte Aufnahme 44 weist keine beweglichen Teile auf, die beispielsweise drehbar oder verlagerbar angeordnet sein müssten. Unter einem Verlagern ist nicht eine elastische Verformung der Aufnahme 44 bzw. der Klemmfinger 52 zu verstehen.

Die Fig. 4 zeigt die Aufnahme 44 der Fig. 3, welche in der Darstellung der Fig. 4 eine Schnappverbindung 50 mit dem Antriebskabel 26 über dessen Ende 38 eingeht. Eine entsprechende Schnappverbindung ist auch am gegenüberliegenden Ende 40 des Antriebskabels 28 vorgesehen.

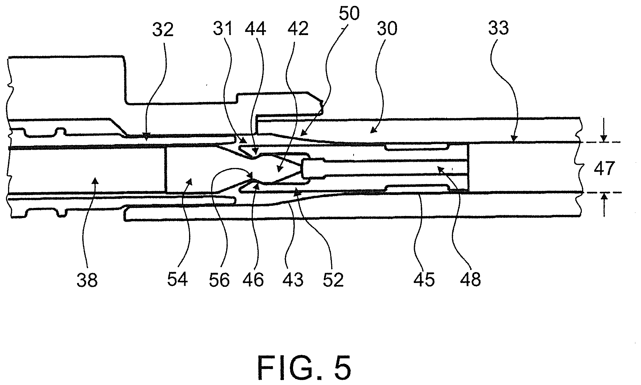

Die entsprechende Schnappverbindung 50 ist in der Fig. 5 in einer Querschnittsansicht dargestellt. Zur Ausbildung der Schnappverbindung 50 ist am Ende 38 des Antriebskabels 26 ein Klemmelement 54 angeordnet. Das Klemmelement 54 weist an einem von dem Antriebskabel 26 abgewandten Ende eine Verdickung 42 auf, welche von der Aufnahme 44 der Anbindung 30 aufgenommen werden kann. Die Schnappverbindung 50 wird dabei hergestellt, indem das Ende 38 des Antriebskabels 26 auf die Anbindung 30 aufläuft, um die zweite Rollobahn 20 in die Schließstellung von der zugehörigen Wickelwelle 16 abzuwickeln. Beim Auflaufen des Klemmelements 54 auf die Aufnahme 44 der Anbindung 30 wird die Aufnahme 44 reversibel elastisch so verformt, dass sie die Verdickung 42 wie eine Snap-Fit-Verbindung aufnimmt und formschlüssig festhält. Hierbei werden die Klemmfinger 52 der Aufnahme 44 reversibel durch die Verdickung 42 radial nach außen weggebogen. Die Klemmfinger 52 weisen jeweils eine Hinterschneidung 46 auf, die durch einen nach innen gerichteten Vorsprung ausgebildet wird. Sobald die Verdickung 42 die Hinterschneidungen 46 passiert hat, federn die Klemmfinger 52 der Aufnahme 44 wieder zurück und lagern sich an eine Einschnürung 56 des Klemmelements 54 an, die zwischen der Verdickung 42 und dem Ende 38 des Antriebskabel angeordnet ist.

Das Klemmelement 54 und das Ende 38 des Antriebskables 28 sind in einem Bereich zwischen der ersten Rolloanordnung 10 und der zweiten Rolloanordnung 12 innerhalb eines Übergangsrohrs 32 geführt. Im Bereich der zweiten Rolloanordnung 12 wird die geschlossenen Schnappverbindung 50 innerhalb eines Führungskanals 33 geführt. Zwischen dem Übergangsrohr 32 und dem Führungskanal 33 ist ein Hohlraum 31 vorgesehen, der eine lichte Weite aufweist, die so dimensioniert ist, dass hier die Schnappverbindung 50 geöffnet werden kann. Der Hohlraum 31 wird dadurch ausgebildet, dass der Führungskanal 33 in einem ersten Abschnitt 43, der dem Übergangsrohr zugewandt ist, aufgeweitet ist. Außerdem ist zur weiteren Ausbildung des Hohlraums 31 das Übergangsrohr 32 beabstandet zu einer Führungsschiene, die den Führungskanal 33 ausbildet, angeordnet. Im Gegensatz hierzu ist der Führungskanal 33 in einem zweiten Abschnitt 45, der auf den ersten Abschnitt 43 folgt, so dimensioniert, dass sich die geschlossenen Schnappverbindung 50 im Bereich zweiten Abschnitts 45 des Führungskanals 33 nicht öffnen kann. Die lichte Weite 47 des zweiten Abschnitts 33 entspricht im Wesentlichen dem Durchmesser der geschlossenen Schnappverbindung 50 und dem Durchmesser der Antriebskabel 26, 28 und erlaubt daher kein Öffnen der Schnappverbindung 50 durch ein Aufbiegen der Klemmfinger 52 radial nach außen. Nur der Hohlraum 31 ist so dimensioniert, dass hier die Klemmfinger 52 nach außen gebogen werden können. Dies bietet den Vorteil dass die Schnappverbindung außerhalb des Hohlraums 31 gegen ein Öffnen gesichert ist.

Die Schnappverbindung 50 ist ferner so ausgebildet, dass sie durch eine Schubkraft des Antriebskabels 26 geschlossen, und durch eine Zugkraft beim Zurückziehen des Antriebskabels 26 gelöst werden kann, sobald diese Zugkraft einen festgelegten Wert überschreitet. Die festgelegte Zugkraft kann dabei durch die entsprechende Ausbildung der Aufnahme 44 und des Klemmelements 54 so eingestellt werden, dass sie bei einem Öffnen der zweiten Rolloanordnung 12 nicht überschritten wird, die Schnappverbindung 50, also geschlossen bleibt. Sobald die zweite Rollobahn 20 beim Öffnen der zweiten Rolloanordnung 12 an der zugehörigen Wickelwelle 16 angelangt ist, die zweite Rollobahn 20 also vollständig aufgewickelt wird, wird durch das Stoppen des Zugspriegels 24 an der Wickelwelle 16 oder an einem Anschlag durch das weitere Verlagern des Antriebskabels 26 eine höhere Zugkraft auf die Schnappverbindung 50 ausgeübt, welches zu einem Lösen der Schnappverbindung 50 führt. Die Schnappverbindung 50 befindet sich in diesen Bewegungsabschnitt im Bereich des Hohlraums 31. Damit wird das Ende 38 des Antriebskabels 26 von der Anbindung 30 mit dem Zugspriegel 24 der zweiten Rollobahn 20 gelöst. Dann kann die erste Rollobahn 18 durch Bewegung des zugehörigen Zugspriegels 22 über die noch verbleibende Auszugslänge (der Längendifferenz zwischen den beiden Rollobahnen 18 und 20) weiterbewegt werden, bis auch die erste Rollobahn 10 vollständig auf der zugehörigen Wickelwelle 14 aufgewickelt ist.

Das Aufwickeln der beiden Rollobahnen 18 und 20 wird durch eine Vorspannung der beiden Wickelwellen 14 und 16 in Aufwickelrichtung unterstützt. Die beiden Wickelwellen 14 und 16 können beispielsweise durch elastische Federelemente wie Spiralfedern in den Wickelwellen 14 und 16 mit der Vorspannung beaufschlagt werden.

Wie bereits erläutert, bietet das erfindungsgemäße Rollosystem gemäß der Fig. 1 bis Fig. 5 den Vorteil, dass der Verriegelungsmechanismus mittels einer besonders einfach herzustellenden elastisch verformbaren Schnappverbindung 50 realisiert wird. So kann beispielsweise die Anbindung 30 einteilig aus Kunststoff spritzgegossen sein. Alternativ kann die Anbindung 30 auch aus mehreren Teilen hergestellt werden, die aber fest miteinander verbunden werden können, ohne dass drehbare oder verlagerbare Elemente vorgesehen sein müssen.

Die Anbindung 30 kann eine Verstärkungseinlage 48 aufweisen auf die das Klemmelement 54 zum Ausbilden der Schnappverbindung 50 aufläuft. Durch die Verstärkungseinlage 48 kann an der Stelle des Auftreffens der Verdickung 42 auf die Anbindung 30 ein härteres Material eingesetzt werden, um die Lebensdauer der Anbindung 30 zu erhöhen. Alternativ kann eine Einlage aus Gummi oder aus einem anderen weichen Material vorgesehen sein als Puffer gegen Stoßgeräusche.

Ein weiterer Vorteil ergibt sich daraus, dass die Schnappverbindung 50 ausgehend von der Offenstellung des Rollosystems gemäß der Fig. 1 über die Schließstellung gemäß der Fig. 2 wieder zurück in die Offenstellung der Fig. 1 immer geschlossen bleibt (aufgrund der Dimensionierung des Führungskanals 33 zwangsgeschlossen), d.h. die beiden Enden 38 und 40 der Antriebskabel 26 und 28 bleiben mit dem Zugspriegel 24 der zweiten Rolloanordnung 12 über dessen Verfahrweg fest verbunden. So wird das Aufwickeln der zweiten Rollobahn 20 auf ihre zugehörige Wickelwelle 16 durch die Antriebskabel 26 und 28 unterstützt und ruckfrei ausgeführt.

Da ferner das Rollosystem so ausgelegt ist, dass die beiden Antriebskabel 26 und 28 die zweite Rolloanordnung 12 aufschieben, d.h. sie laufen auf die Aufnahme 44 auf, um die Schnappverbindung 50 zu schließen, wird die Schnappverbindung 50 beim Abwickeln der zweiten Rollobahn 20 immer in Schließrichtung belastet. Sie kann sich daher beim Abwickeln der zweiten Rollobahn 20 nicht ungewollt lösen. Umgekehrt können die Klemmkräfte durch die Materialauswahl und die Ausgestaltung der Aufnahme 44 und deren Klemmfinger 52 so eingestellt werden, dass sich die Schnappverbindung 50 erst dann löst, wenn die zweite Rollobahn 20 vollständig auf ihrer zugehörigen Wickelwelle 16 aufgewickelt ist, und / oder deren Zugspriegel 24 durch einen Anschlag festgelegt wird.

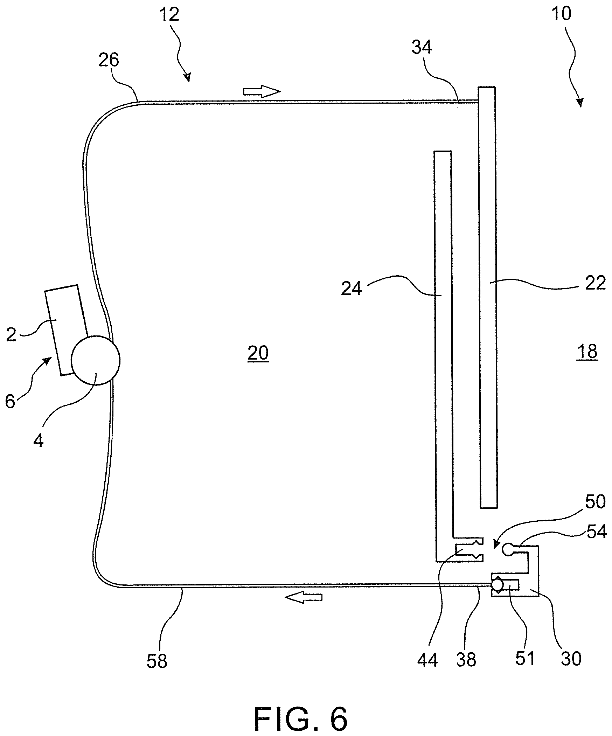

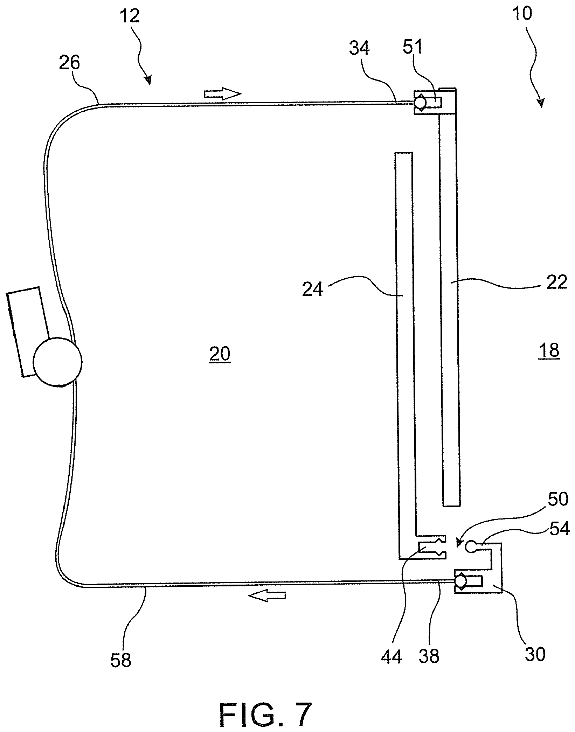

Die Figuren 6 und 7 zeigen zwei weitere Rollosysteme für ein Fahrzeugdach mit einer ersten und einer zweiten Rolloanordnung 10 und 12, die in Dachlängsrichtung versetzt zueinander angeordnet sind und jeweils eine nicht näher dargstellte zugeordnete Wickelwelle aufweisen. Jeder Wickelwelle ist eine Rollobahn 18, 20 zugeordnet, wobei hier die Rollobahn 18 der ersten Rolloanordnung 10 wie bei der Ausführungsform der Fig. 1 und 2 in Auszugsrichtung ebenfalls länger ausgebildet ist, als die Rollobahn 20 der zweiten Rolloanordnung 12. Allerdings ist hier die erste Rolloanordnung 10 mit der längeren Rollobahn 18 in Fahrtrichtung hinter der zweiten Rolloanordnung 12 mit der kürzeren Rollobahn 20 angeordnet, und damit von einem gemeinsamen Antrieb 6 des Rollosystems weiter entfernt als die zweite Rolloanordnung 12.

Der Antrieb 6 der Figuren 6 und 7, der einen Motor 2 und ein vom Motor 2 angetriebenes Ritzel 4 aufweist, welches wiederum Antriebskabel 26 und 58 beider Rolloanordnungen 10 und 12 bewegt, ist ebenso wie bei der Ausführungsform der Fig. 1 in Fahrtrichtung vorne am Rollosystem angeordnet. Hier steht mehr Bauraum zu Verfügung als am hinteren Ende des Rollosystems, wo der Einbau des Antriebs 6 die Kopffreiheit der Fondpassagiere reduzieren würde.

An den beiden freien Enden der Rollobahnen 18 und 20 ist jeweils ein Zugspriegel 22, 24 angeordnet. Ein drucksteif ausgebildetes und/oder drucksteif geführtes Antriebskabel 26 ist dargestellt, welches mit einem ersten Ende 34 mit dem Zugspriegel 22 der ersten Rolloanordnung 10 gekoppelt ist. Bei der Ausführungsform der Fig. 6 ist die Kopplung dabei fest im Sinne der eingangs erläuterten Definition, wird also im normalen Betreib des Rollosystems beim Auf- und Abwickeln der Rollobahnen 10 und 12 nie gelöst. Es ist allerdings eine zweite Schnappverbindung 51 vorgesehen, die zur Vereinfachung der Montage oder Demontage des Rollosystems geöffnet werden kann.

Ein weiteres Antriebskabel 58 ist mit dem Zugspriegel 24 der zweiten Rolloanordnung 12 mit der kürzeren Rollobahn 20 über eine Schnappverbindung 50 lösbar koppelbar verbunden. In einer Offenstellung des Rollosystems mit aufgewickelten Rollobahnen 18 und 20 ist dabei ein Ende 38 des Antriebskabels 58 vom Zugspriegel 24 der zweiten Rolloanordnung 12 gelöst.

Zum Abrollen der zweiten Rollobahn 20 wird das Antriebskabel 58 nach einem Verfahrweg der im Wesentlichen dem Längenunterschied der beiden Rollobahnen 18 und 20 entspricht, mit dem Zugspriegel 24 der zweiten Rolloanordnung 12 gekoppelt. Diese Kopplung bleibt während der gesamten Abwickelbewegung der zweiten Rollobahn 20 geschlossen, und auch bei einem anschließenden Aufwickeln der zweiten Rollobahn 20, mittels derer das Rollosystem wieder in die Offenstellung überführt wird.

Die Kopplung und die Entkopplung des Antriebskabels 58 mit dem Zugspriegel 24 der zweiten Rolloanordnung 12 erfolgt dabei wieder selbsttätig über eine elastisch verformbare Schnappverbindung 50. Da bei den Ausführungsformen der Figuren 5 und 6 (im Gegensatz zu der Ausführungsform der Fig. 1) aber die kürzere Rollobahn 18 hinten angeordnet ist, der Antrieb 2 aber am Rollosystem vorne, beinhaltet die Schnappverbindung 50 hier eine Umlenkung um 180°.

Die elastisch verformbare Schnappverbindung 50 ist so ausgestaltet, dass das Ende 38 des Antriebskabels 58 mit dem Zugspriegel 24 der zweiten Rolloanordnung 12 lösbar koppelbar ist.

Beide Figuren 6 und 7 zeigen eine Anbindung 30 zum Verbinden des Endes 38 des Antriebskabels 58 mit dem zugeordneten Zugspriegel 24 der zweiten Rolloanordnung 12. Die Anbindung 30 weist eine Aufnahme 44 auf, die wie die Aufnahme 44 der vorhergehenden Figuren ausgebildet sein kann.

Durch die Umlenkung der elastischen Schnappverbindung 50 der Figuren 6 und 7 im Bereich eines Klemmelements 54 der Anbindung 30 um im Wesentlichen 180°, kann die erste, längere Rollobahn 18 durch das Antriebskabel 26 in eine Schließstellung mit abgewickelter erster Rollobahn 18 geschoben, und in eine Offenstellung mit aufgewickelter erster Rollobahn 18 gezogen werden. Die zweite, kürzere Rollobahn 20 wird durch das zweite Antriebskabel 58 in eine Schließstellung mit abgewickelter zweiter Rollobahn 20 gezogen und in eine Offenstellung mit aufgewickelter zweiter Rollobahn 20 geschoben. Beide Antriebskabel 26 und 58 werden synchron durch das Ritzel 4 des Antriebs 6 bewegt und daher kann alternativ auch ein einziges durchgehendes Antriebskabel (wie in den Figuren 1 und 2 gezeigt) eingesetzt werden.

Die Umlenkung ist so ausgestaltet, dass sich das Klemmelement 54 der Ausführungsformen der Figuren 6 und 7 in Richtung der Aufnahme 44 der Schnappverbindung 50 parallel zum benachbarten Antriebskabel 58 erstreckt und zwar vom Ende 38, an dem das Klemmelement 54 angeordnet ist, zur Mitte des Antriebskabels 58 hin. Das Klemmelement 54 wird zum Schließen der Schnappverbindung 50 in die Aufnahme 44 gezogen, während bei der Ausführungsform der Figuren 1 und 2 das dort dargestellte entsprechende Klemmelement 54 in die Aufnahme 44 geschoben wird.

Unter "Schieben" und "Ziehen" sei allgemein eine Bewegung von Bauteilen zu verstehen die durch eine Druck- bzw. einer Zugbelastung eines Antriebskabels realisiert wird.

### Bezugszeichenliste

- 2: Motor
- 4: Ritzel
- 6: Antrieb
- 10: erste Rolloanordnung
- 12: zweite Rolloanordnung
- 14, 16: Wickelwellen
- 18: erste Rollobahn
- 20: zweite Rollobahn
- 22, 24: Zugspriegel
- 26, 28: Antriebskabel
- 30: Anbindung Zugspriegel
- 31: Hohlraum
- 32: Übergangsrohr
- 33: Führungskanal
- 34, 36: Enden der Antriebskabel
- 38, 40: Enden der Antriebskabel
- 42: Verdickung
- 43: erster Abschnitt von 33
- 44: Aufnahme
- 45: zweiter Abschnitt von 33
- 46: Hinterschneidung
- 47: lichte Weite von 45
- 48: Verstärkungseinlage
- 50: Schnappverbindung
- 51: zweite Schnappverbindung
- 52: Klemmfinger
- 54: Klemmelement
- 56: Einschnürung
- 58: Antriebskabel

## Patentansprüche

1. Rollosystem für ein Fahrzeugdach, mit einer ersten (10) und einer zweiten Rolloanordnung (12), die in Dachlängsrichtung versetzt zueinander angeordnet sind und jeweils eine Wickelwelle (14, 16) aufweisen, sowie jeweils einer zugehörigen aufwickelbaren Rollobahn (18, 20), wobei die Rollobahn (18) der ersten Rolloanordnung (10) in Auszugsrichtung länger ausgebildet ist, als die Rollobahn (20) der zweiten Rolloanordnung (12), sowie jeweils einem an dem freien Ende der beiden Rollobahnen (18, 20) angreifenden Zugspriegel (22, 24), und mindestens einem von einem Antrieb angetriebenes drucksteifen Antriebskabel (26, 28), welches mit einem ersten Abschnitt mit dem Zugspriegel (22) der ersten Rolloanordnung (10) fest gekoppelt ist, und mit einem zweiten Abschnitt mit dem Zugspriegel ( 24) der zweiten Rolloanordnung (12) lösbar koppelbar ist,
wobei zu einem Abrollen der zweiten Rollobahn (20) das Antriebskabel (26, 28) mit seinem zweiten Abschnitt ausgehend von einem entkoppelten Zustand mit dem Zugspriegel (24) der zweiten Rolloanordnung (12) gekoppelt wird, und nach einem erneuten vollständigen Aufrollen der zweiten Rollobahn (20) zum weiteren Aufrollen der ersten Rollobahn (18) mit seinem zweiten Abschnitt vom Zugspriegel (24) der zweiten Rollobahn (20) wieder entkoppelt wird, wobei die Koppelung und Entkoppelung mittels eines Verriegelungsmechanismus selbsttätig erfolgt;
**dadurch gekennzeichnet, dass**:
der Verriegelungsmechanismus eine elastisch verformbare Schnappverbindung (50) aufweist, mittels derer der zweite Abschnitt des Antriebskabels (26, 28) mit dem Zugspriegel (24) der zweiten Rolloanordnung (12) lösbar koppelbar ist,
und die elastisch verformbare Schnappverbindung (50) dabei so ausgebildet ist, dass sie durch eine Kraft, mit der sie durch den Antrieb beaufschlagt werden kann, unter einer reversiblen elastischen Verformung entkoppelt werden kann;
wobei die elastisch verformbare Schnappverbindung (50) eine Verdickung (42) an einem Klemmelement (54) aufweist, welches an einem Ende (38) des Antriebskabels angeordnet ist, und die Verdickung zur lösbaren Kopplung durch eine Aufnahme (44) der Schnappverbindung (50) aufgenommen werden kann, wobei die Aufnahme (44) elastisch verformt wird,
wobei Klemmfinger (52) der Aufnahme (44) reversibel durch die Verdickung (42) radial nach außen weggebogen werden,
und die Klemmfinger (52) jeweils eine Hinterschneidung (46) aufweisen, die durch einen nach innen gerichteten Vorsprung ausgebildet wird, und
sobald die Verdickung (42) die Hinterschneidungen (46) passiert hat, die Klemmfinger (52) der Aufnahme (44) wieder zurück federn und sich an eine Einschnürung (56) des Klemmelements (54) anlagern, die zwischen der Verdickung (42) und dem Ende (38) des Antriebskabel angeordnet ist, wobei
die Verdickung (42) am zweiten Abschnitt des Antriebskabels (26, 28) angeordnet ist, und die Aufnahme (44) entsprechend mit dem Zugspriegel (24) der zweiten Rolloanordnung (12) verbunden ist.

2. Rollosystem nach Anspruch 1, **dadurch gekennzeichnet, dass** in einem Bereich der zweiten Rolloanordnung (12) die geschlossene Schnappverbindung (50) innerhalb eines Führungskanals (33) geführt wird, der mindestens abschnittsweise so dimensioniert ist, dass sich die geschlossene Schnappverbindung (50) in diesem Abschnitt nicht öffnen kann.

3. Rollosystem nach Anspruch 1 oder 2, **dadurch gekennzeichnet, dass** sich die beiden Abschnitte an den beiden Enden (34, 36, 38, 40) des Antriebskabels (26, 28) befinden.

4. Rollosystem nach einem der vorhergehenden Ansprüche, **dadurch gekennzeichnet, dass** das Antriebskabel (26, 28) mit seinem zweiten Abschnitt mit dem Zugspriegel (24) der zweiten Rolloanordnung (12) im teilweise und vollständig abgerollten Zustand der zweiten Rollobahn (20) gekoppelt verbleibt.

5. Rollosystem nach einem der vorhergehenden Ansprüche, **dadurch gekennzeichnet, dass** zwei drucksteife Antriebskabel (26, 28) vorgesehen sind, die von dem Antrieb in entgegengesetzter Richtung gemeinsam angetrieben werden und jeweils an gegenüberliegenden seitlichen Enden des jeweiligen Zugspriegels (22, 24) über die ersten bzw. zweiten Abschnitte angreifen.

6. Rollosystem nach einem der vorhergehenden Ansprüche, **dadurch gekennzeichnet, dass** sich der zweite Abschnitt in entgegengesetzter Richtung zum ersten Abschnitt bewegt und die beiden Rolloanordnungen (10, 12) in entgegengesetzter Richtung zueinander ausziehbar sind, wobei
die erste Rollobahn (18) durch das Antriebskabel (26, 28) in eine Schließstellung mit abgewickelter erster Rollobahn (18) gezogen und
in eine Offenstellung mit aufgewickelter erster Rollobahn (18) geschoben wird.

7. Rollosystem nach einem der vorhergehenden Ansprüche, **dadurch gekennzeichnet, dass** die zweite Rollobahn (20) durch das Antriebskabel (26, 28) in eine Schließstellung mit abgewickelter zweiter Rollobahn (20) geschoben und in eine Offenstellung mit aufgewickelter zweiter Rollobahn (20) gezogen wird.

8. Rollosystem nach Anspruch 1, **dadurch gekennzeichnet, dass** in einem Bereich der zweiten Rolloanordnung (12) die geschlossene Schnappverbindung (50) innerhalb eines Führungskanals (33) geführt wird, wobei vor und / oder in einem ersten Abschnitt (43) des Führungskanals (33), der der ersten Rolloanordnung (10) zugewandt ist, ein Hohlraum (31) vorgesehen ist, der eine lichte Weite aufweist, die so dimensioniert ist, dass sich hier die Schnappverbindung (50) öffnen kann, und der Führungskanal (33) in einem zweiten Abschnitt (45), der auf den ersten Abschnitt (43) folgt, so dimensioniert ist, dass sich die geschlossenen Schnappverbindung (50) nicht öffnen kann, wobei vorzugsweise
eine lichte Weite (47) des zweiten Abschnitts (33) im Wesentlichen dem Durchmesser der geschlossenen Schnappverbindung (50) entspricht, sodass ein Öffnen der Schnappverbindung (50) durch ein Aufbiegen der Klemmfinger (52) radial nach außen verhindert wird.

9. Rollosystem nach einem der vorhergehenden Ansprüche, **dadurch gekennzeichnet, dass** zwei drucksteifen Antriebskabel (26, 28) vorgesehen sind, die von dem Antrieb in entgegengesetzter Richtung gemeinsam angetrieben werden und jeweils an gegenüberliegenden seitlichen Enden des jeweiligen Zugspriegels (22, 24) über die ersten (34, 36) bzw. zweiten Abschnitte angreifen.

10. Rollosystem nach einem der vorhergehenden Ansprüche, **dadurch gekennzeichnet, dass** zwei drucksteife Antriebskabel (26, 28) vorgesehen sind, und beide Antriebskabel zweimal um je 90° umgelenkt werden, wobei die beiden Antriebskabel (26, 28) zusammen eine in der Aufsicht U-förmige Konfiguration bilden und wobei ein Antrieb im Verbindungsbereich zwischen den beiden "Schenkeln" des U die Antriebskabel antreibt, und vorzugsweise
der Antrieb auf der Seite des Rollosystems angeordnet ist, zu der der Zugspriegel (22) der ersten Rollobahn (18) beim Abwickeln der ersten Rollobahn (18) bewegt wird.

11. Rollosystem nach einem der vorhergehenden Ansprüche, **dadurch gekennzeichnet, dass** das Antriebskabel (26) in einem Bereich zwischen der ersten Rolloanordnung (10) und der zweiten Rolloanordnung (12) innerhalb eines Übergangsrohrs (32) geführt ist, und vorzugsweise das Übergangsrohr (32) so ausgerichtet ist, dass es den zweiten Abschnitt des Antriebskabels (26) so zentriert, dass die Schnappverbindung (50) bei einem Vorschieben des Antriebskabels in Richtung der zweiten Rolloanordnung (12) geschlossen wird.

12. Rollosystem nach einem der vorhergehenden Ansprüche, **dadurch gekennzeichnet, dass** die elastische Schnappverbindung (50) eine Umlenkung aufweist, und
die erste Rollobahn (18) durch ein erstes Antriebskabel (26) in eine Schließstellung mit abgewickelter erster Rollobahn (18) geschoben, und in eine Offenstellung mit aufgewickelter erster Rollobahn (18) gezogen wird,
die zweite Rollobahn (20) durch ein zweites Antriebskabel (58) in eine Schließstellung mit abgewickelter zweiter Rollobahn (20) gezogen und in eine Offenstellung mit aufgewickelter zweiter Rollobahn (20) geschoben wird, und vorzugsweise
ein Klemmelement (54), welches an einem Ende (38) des Antriebskabels (58) angeordnet ist, zum Schließen der Schnappverbindung (50) in eine Aufnahme (44) am Zugspriegel (24) der zweiten Rolloanordnung (12) gezogen wird.

13. Rollosystem nach Anspruch 12, **dadurch gekennzeichnet, dass** die Umlenkung so ausgestaltet ist, dass sich das Klemmelement (54) der Schnappverbindung (50), welches an einem Ende (38) des Antriebskabels (58) angeordnet ist, in Richtung einer Aufnahme (44) der Schnappverbindung (50), die am Zugspriegel (24) angeordnet ist, und parallel zum benachbarten Antriebskabel (58) erstreckt und vom Ende (38) zur Mitte des Antriebskabels (58) hin, wobei vorzugsweise
eine weitere Schnappverbindung (51) vorgesehen ist, mittels derer die im normalen Betreib des Rollosystems feste Kopplung des Antriebskabels (26) mit dem Zugspriegel (22) der ersten Rolloanordnung (10) realisiert wird, und zur Montage und Demontage des Rollosystems gelöst werden kann.

## Claims

1. Roller blind system for a vehicle roof, having a first roller blind arrangement (10) and a second roller blind arrangement (12) which are arranged offset with respect to one another in the roof longitudinal direction and which each have a winding shaft (1.4, 16), and having in each case an associated roller blind web (18, 20) which can be wound up, wherein the roller blind web (18) of the first roller blind arrangement (10) is longer in the extension direction than the roller blind, web (20) of the second roller blind arrangement (12), and having in each case a tension hoop (22, 24) which engages on the free end of the two roller blind webs (18, 20), and having at least one drive cable (26, 28) which is driven by a drive and which is rigid in compression and which is fixedly coupled, by a first portion, to the tension hoop (22) of the first roller blind arrangement (10), and is releasably couplable, by a second portion, to the tension hoop (24) of the second roller blind arrangement (12),
wherein, for unrolling the second roller blind web (20), the drive cable (26, 28) is coupled, by its second portion, proceeding from a decoupled state, to the tension hoop (24) of the second roller blind arrangement (12), and after complete rolling up again of the second roller blind web (20), for further rolling up of the first roller blind web (18) is again decoupled, by its second portion, from the tension hoop (24) of the second roller blind web (20), wherein the coupling and decoupling take place automatically by means of a locking mechanism,
**characterized in that**:
the locking mechanism has an elastically deformable snap-action connection (50) by means of which the second portion of the drive cable (26, 28) is releasably couplable to the tension hoop (24) of the second roller blind arrangement (12),
and the elastically deformable snap-action connection (50) is designed in such a manner that it can be decoupled, with reversible elastic deformation, by a force with which it can be acted upon by the drive,
wherein the elastically deformable snap-action connection (50) has a thickened portion (42) on a clamping element (54) which is arranged at one end (38) of the drive cable, and the thickened portion can be received, for the releasable coupling, by means of a receptacle (44) of the snap-action connection (50), the receptacle (44) being elastically deformed,
wherein clamping fingers (52) of the receptacle (44) are reversibly bent away radially outwards by the thickened portion (42), and the clamping fingers (52) each have an undercut (46) which is formed by an inwardly directed protrusion, and as soon as the thickened portion (42) has passed the undercuts (46), the clamping fingers (52) of the receptacle (44) spring back again and are deposited onto a constriction (56) of the clamping element (54), which constriction is arranged between the thickened portion (42) and the end (38) of the drive cable, wherein the thickened portion (42) is arranged on the second portion of the drive cable (26, 28), and the receptacle (44) is correspondingly connected to the tension hoop (24) of the second roller blind arrangement (12).

2. Roller blind system according to Claim 1, **characterized in that**, in a region of the second roller blind arrangement (12), the closed snap-action connection (50) is guided within a guide channel (33) which is dimensioned at least in certain sections in such a manner that the closed snap-action connection (50) cannot open in this portion.

3. Roller blind system according to Claim 1 or 2, **characterized in that** the two portions are located at both ends (34, 36, 38, 40) of the drive cable (26, 28).

4. Roller blind system according to one of the preceding claims, **characterized in that** the drive cable (26, 28) remains coupled by its second portion to the tension hoop (24) of the second roller blind arrangement (12) in the partially and completely unrolled state of the second roller blind web (20).

5. Roller blind system according to one of the preceding claims, **characterized in that** two drive cables (26, 28) which are rigid in compression are provided, which drive cables are driven together by the drive in opposite directions and which engage in each case on opposite lateral ends of the respective tension hoop (22, 24) by means of the first and second portions.

6. Roller blind system according to one of the preceding claims, **characterized in that** the second portion moves in the opposite direction to the first portion, and the two roller blind arrangements (10, 12) are extendable in opposite directions to each other, wherein the first roller blind web (18) is pulled by the drive cable (26, 28) into a closed position with the first roller blind web (18) unwound and is pushed into an open position with the first roller blind web (18) wound up.

7. Roller blind system according to one of the preceding claims, **characterized in that** the second roller blind web (20) is pushed by the drive cable (26, 28) into a closed position with the second roller blind web (20) unwound and is pulled into an open position with the second roller blind web (20) wound up.

8. Roller blind system according to Claim 1, **characterized in that**, in a region of the second roller blind arrangement (12), the closed snap-action connection (50) is guided within a guide channel (33), wherein a cavity (31) is provided before and/or in a first portion (43) of the guide channel (33), which portion faces the first roller blind arrangement (10), the cavity having a clear width which is dimensioned in such a manner that the snap-action connection (50) can open here, and the guide channel (33), in a second portion (45) which follows the first portion (43), is dimensioned in such a manner that the closed snap-action connection (50) cannot open, wherein preferably a clear width (47) of the second portion (33) substantially corresponds to the diameter of the closed snap-action connection (50) such that opening of the snap-action connection (50) is prevented by bending up the clamping fingers (52) radially outwards.

9. Roller blind system according to one of the preceding claims, **characterized in that** two drive cables (26, 28) which are rigid in compression are provided, which drive cables are driven together by the drive in opposite directions and which engage in each case on opposite lateral ends of the respective tension hoop (22, 24) by means of the first and second portions (34, 36).

10. Roller blind system according to one of the preceding claims, **characterized in that** two drive cables (26, 28) which are rigid in compression are provided, and the two drive cables are deflected twice by 90° each, wherein the two drive cables (26, 28) together form a configuration which is U-shaped in top view, and wherein a drive in the connecting region between the two "legs" of the U drives the drive cable, and preferably the drive is arranged on that side of the roller blind system to which the tension hoop (22) of the first roller blind web (18) is moved during the unwinding of first roller blind web (18).

11. Roller blind system according to one of the preceding claims, **characterized in that** the drive cable (26), in a region between the first roller blind arrangement (10) and the second roller blind arrangement (12), is guided within a transition tube (32), and preferably the transition tube (32) is oriented in such a manner that it centres the second portion of the drive cable (26) such that the snap-action connection (50) is closed when the drive cable is advanced in the direction of the second roller blind arrangement (12).

12. Roller blind system according to one of the preceding claims, **characterized in that** the elastic snap-action connection (50) has a deflection, and the first roller blind web (18) is pushed by a first drive cable (26) into a closed position with the first roller blind web (18) unwound and is pulled into an open position with the first roller blind web (18) wound up,
and the second roller blind web (20) is pulled by a second drive cable (58) into a closed position with the second roller blind web (20) unwound and is pushed into an open position with the second roller blind web (20) wound up, and preferably
a clamping element (54) which is arranged at one end (38) of the drive cable (58) is pulled into a receptacle (44) on the tension hoop (24) of the second roller blind arrangement (12) in order to close the snap-action connection (50).

13. Roller blind system according to Claim 12, **characterized in that** the deflection is configured in such a manner that the clamping element (54) of the snap-action connection (50), which clamping element is arranged at one end (38) of the drive cable (58), extends in the direction of a receptacle (44) of the snap-action connection (50), which is arranged on the tension hoop (24), and parallel to the adjacent drive cable (58) and from the end (38) towards the centre of the drive cable (58), wherein preferably
a further snap-action connection (51) is provided, by means of which the coupling, which is fixed during the normal operation of the roller blind system, of the drive cable (26) to the tension hoop (22) of the first roller blind arrangement (10) is realized, and can be released for installing and removing the roller blind system.

## Revendications

1. Système de stores à enroulement pour un toit de véhicule, comprenant un premier (10) et un deuxième (12) agencements de store, qui sont agencés de manière décalée l'un par rapport à l'autre dans la direction longitudinale du toit et qui présentent chacun un arbre d'enroulement (14, 16), ainsi qu'une bande de store (18, 20) enroulable correspondante, la bande de store (18) du premier agencement de store (10) étant plus longue dans la direction d'extraction que la bande de store (20) du deuxième agencement de store (12), ainsi qu'une latte de traction (22, 24) respective agissant sur l'extrémité libre des deux bandes de store (18, 20), et au moins un câble d'entraînement (26, 28) résistant à la pression, entraîné par un entraînement, qui est relié de manière fixe, par une première partie, à la latte de traction (22) du premier agencement de store (10), et qui est apte à être relié de manière séparable, par une deuxième partie, à la latte de traction (24) du deuxième agencement de store (12),
le câble d'entraînement (26, 28) étant relié avec sa deuxième partie à la latte de traction (24) du deuxième agencement de store (12) en partant d'un état découplé pour un déroulement de la deuxième bande de store (20), et étant à nouveau découplé, par sa deuxième partie, de la latte de traction (24) de la deuxième bande de store (20) après un nouvel enroulement complet de la deuxième bande de store (20) pour un nouvel enroulement de la première bande de store (18), le couplage et le découplage s'effectuant automatiquement au moyen d'un mécanisme de verrouillage ;
**caractérisé en ce que** :
le mécanisme de verrouillage comprend une liaison par encliquetage (50) élastiquement déformable, au moyen de laquelle la deuxième partie du câble d'entraînement (26, 28) est apte à être reliée de manière séparable à la latte de traction (24) du deuxième agencement de store (12),
et la liaison par encliquetage (50) élastiquement déformable est alors conçue de telle sorte qu'elle est apte à être découplée par une force avec laquelle elle est apte à être sollicitée par l'entraînement, en subissant une déformation élastique réversible ;
la liaison par encliquetage (50) élastiquement déformable présente un renflement (42) sur un élément de serrage (54) qui est agencé à une extrémité (38) du câble d'entraînement, et le renflement est apte à être reçu pour un accouplement réversible par un logement (44) de la liaison par encliquetage (50), le logement (44) étant déformé élastiquement,
des doigts de serrage (52) du logement (44) étant écartés radialement vers l'extérieur de manière réversible par le renflement (42),
et les doigts de serrage (52) présentent chacun une contre-dépouille (46) qui est formée par une saillie dirigée vers l'intérieur, et
dès que le renflement (42) a passé les contre-dépouilles (46), les doigts de serrage (52) du logement (44) reviennent élastiquement en arrière et s'appliquent contre un rétrécissement (56) de l'élément de serrage (54), qui est agencé entre le renflement (42) et l'extrémité (38) du câble d'entraînement,
le renflement (42) étant agencé sur la deuxième partie du câble d'entraînement (26, 28), et le logement (44) est relié de manière correspondante à la latte de traction (24) du deuxième agencement de store (12).

2. Système de stores à enroulement selon la revendication 1, **caractérisé en ce que**, dans une zone du deuxième agencement de store à enroulement (12), la liaison par encliquetage fermée (50) est guidée à l'intérieur d'un canal de guidage (33) qui est dimensionné, au moins par sections, de telle sorte que la liaison par encliquetage fermée (50) ne peut pas s'ouvrir dans cette section.

3. Système de stores à enroulement selon la revendication 1 ou 2, **caractérisé en ce que** les deux parties se trouvent aux deux extrémités (34, 36, 38, 40) du câble d'entraînement (26, 28).

4. Système de stores à enroulement selon l'une des revendications précédentes, **caractérisé en ce que** le câble d'entraînement (26, 28) reste relié par sa deuxième partie à la latte de traction (24) du deuxième agencement de store (12) à l'état partiellement et totalement déroulé de la deuxième bande de store (20).

5. Système de stores à enroulement selon l'une des revendications précédentes, **caractérisé en ce qu'**il est prévu deux câbles d'entraînement (26, 28) rigides à la pression, qui sont entraînés conjointement par l'entraînement dans des directions opposées et qui s'engagent chacun sur les extrémités latérales opposées de la latte de traction (22, 24) respective par les première ou deuxième parties.

6. Système de stores à enroulement selon l'une des revendications précédentes, **caractérisé en ce que** la deuxième partie se déplace dans la direction opposée à la première partie et **en ce que** les deux agencements de store à enroulement (10, 12) sont aptes à être déployés dans des directions opposées l'une à l'autre,
la première bande de store (18) étant tirée par le câble d'entraînement (26, 28) dans une position de fermeture avec la première bande de store (18) déroulée, et
dans une position d'ouverture, la première bande de store (18) étant enroulée.

7. Système de stores à enroulement selon l'une des revendications précédentes, **caractérisé en ce que** la deuxième bande de store (20) est poussée par le câble d'entraînement (26, 28) dans une position de fermeture avec la deuxième bande de store (20) déroulée et est tirée dans une position d'ouverture avec la deuxième bande de store (20) enroulée.

8. Système de stores à enroulement selon la revendication 1, **caractérisé en ce que**, dans une zone du deuxième agencement de store à enroulement (12), la liaison par encliquetage (50) fermée est guidée à l'intérieur d'un canal de guidage (33), un espace creux (31) étant prévu devant et/ou dans une première partie (43) du canal de guidage (33), qui est tournée vers le premier agencement de store à enroulement (10), lequel espace creux présente une largeur intérieure qui est dimensionnée de telle sorte que la liaison par encliquetage (50) puisse s'ouvrir ici, et le canal de guidage (33) est dimensionné, dans une deuxième partie (45) qui suit la première partie (43), de telle sorte que la liaison par encliquetage fermée (50) ne peut pas s'ouvrir,
une largeur intérieure (47) de la deuxième partie (33) correspondant de préférence essentiellement au diamètre de la liaison encliquetable fermée (50), de sorte qu'une ouverture de la liaison par encliquetage (50) est empêchée par un fléchissement des doigts de serrage (52) radialement vers l'extérieur.

9. Système de stores à enroulement selon l'une des revendications précédentes, **caractérisé en ce qu'**il est prévu deux câbles d'entraînement (26, 28) rigides à la pression, qui sont entraînés conjointement par l'entraînement dans des directions opposées et qui s'engagent chacun sur des extrémités latérales opposées des lattes de traction (22, 24) respectives par l'intermédiaire des premières et des deuxièmes parties (34, 36).

10. Système de stores à enroulement selon l'une des revendications précédentes, **caractérisé en ce que** deux câbles d'entraînement (26, 28) rigides à la pression sont prévus, et les deux câbles d'entraînement sont déviés deux fois de 90°Chacun, les deux câbles d'entraînement (26, 28) formant ensemble une configuration en forme de U en vue de dessus, et un entraînement dans la zone de liaison entre les deux "branches" du U entraînant les câbles d'entraînement, et de préférence
l'entraînement est agencé sur le côté du système de stores à enroulement vers lequel la latte de traction (22) de la première bande de store (18) est déplacée lors du déroulement de la première bande de store (18).

11. Système de stores à enroulement selon l'une des revendications précédentes, **caractérisé en ce que** le câble d'entraînement (26) est guidé à l'intérieur d'un tube de transition (32) dans une zone située entre le premier agencement de store (10) et le deuxième agencement de store (12), et de préférence le tube de transition (32) est orienté de manière à centrer la deuxième partie du câble d'entraînement (26) de telle sorte que la liaison encliquetable (50) soit fermée lorsque le câble d'entraînement est avancé vers le deuxième agencement de store (12).

12. Système de stores à enroulement selon l'une des revendications précédentes, **caractérisé en ce que** la liaison élastique à encliquetage (50) présente un renvoi, et
la première bande de store (18) est poussée par un premier câble d'entraînement (26) dans une position de fermeture avec la première bande de store (18) déroulée, et est tirée dans une position d'ouverture avec la première bande de store (18) enroulée,
la deuxième bande de store (20) est tirée par un deuxième câble d'entraînement (58) dans une position de fermeture avec la deuxième bande de store (20) déroulée, et est poussée dans une position d'ouverture avec la deuxième bande de store (20) enroulée, et de préférence
un élément de serrage (54), qui est agencé à une extrémité (38) du câble d'entraînement (58), est tiré dans un logement (44) sur la latte de traction (24) du deuxième agencement de store (12) pour fermer la liaison par encliquetage (50).

13. Système de stores à enroulement selon la revendication 12, **caractérisé en ce que** le renvoi est conçu de telle sorte que l'élément de serrage (54) de la liaison par encliquetage (50), qui est agencé à une extrémité (38) du câble d'entraînement (58), s'étend en direction d'un logement (44) de la liaison par encliquetage (50), qui est aménagé sur la latte de traction (24), et parallèlement au câble d'entraînement (58) adjacent, et depuis l'extrémité (38) vers le milieu du câble d'entraînement (58),
une autre liaison par encliquetage (51) est de préférence prévue, au moyen de laquelle la liaison fixe du câble d'entraînement (26) avec la latte de traction (22) du premier agencement de store (10) est réalisée en fonctionnement normal du système de stores à enroulement, et est apte à être détachée pour le montage et le démontage du système de stores à enroulement.
